# EUROPEAN PATENT SPECIFICATION

(11) **EP 4 174 399 B1**
(45) Date of publication and mention of the grant of the patent: **27.08.2025**
(21) Application number: 22203607.1
(22) Date of filing: 25.10.2022
(51) Int. Cl.: F24F 13/32, F16M 13/02, F16L 3/22

(54) **A SUPPORT BRACKET FOR EQUIPMENT, IN PARTICULAR FOR AIR-CONDITIONING UNITS**
EINE HALTERUNG FÜR GERÄTE, INSBESONDERE FÜR KLIMAGERÄTE
UN SUPPORT POUR ÉQUIPEMENT, EN PARTICULIER POUR UNITÉ DE CLIMATISATION

(30) Priority: 26.10.2021 IT 202100027446
(43) Date of publication of application: 03.05.2023
(73) Proprietor: Aspen Pumps Italia s.r.l., 35030 Bastia di Rovolon / Padova (IT)
(72) Inventor: Cappellari, Dino, 35030 Rubano (PD) (IT)
(74) Representative: Fabris, Stefano

(56) References cited:
- EP-A1- 3 792 567
- EP-A2- 2 369 248
- WO-A1-2019/175741
- JP-A- 2001 182 970
- JP-A- 2006 308 243

## Description

### Technical field

The present invention relates to a support bracket for equipment, in particular to units for air-conditioning plants, having the features set out in the preamble of the main claim 1.

The invention particularly, though in a non-exclusive manner, involves the field of bracket-like fixing devices for supporting the exchange groups for air-conditioning plants.

### Technological background

In this context, it is known that the heat exchanger groups, which are used in the air-conditioning plants and which supply the diffusors which are provided in the surrounding areas of the buildings to be air-conditioned, have to be arranged and supported outside the buildings or in any case relocated to such a position as to communicate with the exterior.

Furthermore, it is typical that the formation of the buildings requires that these exchangers, in addition to being positioned on terraces and/or roofs, be suspended on the external walls of the buildings or on walls near balconies and windows which are directed towards the exterior of a building so as to allow a suitable heat exchange.

In order to fix these exchangers to the walls, the widespread use of typically L-shaped brackets which have such dimensions as to have suitable robustness is well-known, a pair of these brackets normally being sufficient, which brackets are fixed both directly to the walls and to guides which in turn are fixed to the walls.

These brackets are further provided with openings which define the seats for inserting fixing screws with which the equipment can be secured to the brackets themselves.

A known type provides for the brackets to be made from metal material, wherein each of the bracket portions which form the L-shaped formation is configured with a U-shaped cross-section which is suitable for providing the member of the bracket with adequate resistance to the loads applied.

In brackets of this configuration, the bracket portion which is provided for supporting and fixing the equipment item on the bracket which under operating conditions is arranged horizontally is provided with slot-like through-holes, in which the fixing screws are inserted. Typically, these screws are inserted in the slot-like holes in an upward direction so as to engage with the anchoring extension pieces of the equipment and to allow the locking nut to be screwed from above on the threaded shank of the screw.

One of the limitations encountered in these solutions involves the fact that the locking screws have to be retained in position by the fitter until the locking nut is screwed on, otherwise there is the risk of the screw leaving and consequently falling out. Considering that the anchoring of the equipment items to the bracket is often brought about at significant heights above the ground and in disadvantageous positions for the fitter, the application of the locking screws often complicates the operations of fixing the equipment item to the support bracket. Patent document WO-2019/175741-A describes a L-shaped support bracket comprising a protection member underneath the lower bracket portion.

### Description of the invention

The invention is directed towards these types of brackets and the main object is to provide a support bracket for equipment items, in particular air-conditioning plant units, which is structurally and functionally configured to overcome the limitations set out and so as to make the steps of anchoring the equipment items to the support brackets simple, rapid and convenient for the fitter.

This object and other objects which will be clearly appreciated below are achieved by the invention by means of a support bracket of the above-mentioned type, which has the features of the appended independent claim 1. The dependent claims relate to features of preferred embodiments of the support bracket according to the present invention.

According to an aspect of the invention, the bracket comprises a first bracket portion and a second bracket portion which are arranged for anchoring the bracket to a wall and for supporting and fixing the equipment to the bracket, respectively, the first and second bracket portions being able to be secured to each other in an operating condition, in which they assume an L-shaped configuration suitable for supporting the equipment, there being defined on the second bracket portion a surface portion which is intended for supporting the equipment, the surface portion being provided with at least one through-opening which is in the form of an elongate slot, for engaging in a sliding manner with at least one respective screw type clamping member which is intended to anchor the equipment on the corresponding bracket, the bracket comprising, in the region of the at least one through-opening, a guide and abutment element which can be fixedly joined to the second bracket portion in a position below the surface portion and which is able to abut the screw type member when the screw type member is inserted in the opening so as to prevent the screw type member from falling out of the opening.

Preferably, the slot-like opening has an elongate formation in a main longitudinal direction and the guide and abutment element extends longitudinally in the direction at a predetermined distance from the slot-like opening.

Preferably, the through-opening is widened in the region of at least one of the opposite longitudinal ends thereof so as to allow the insertion of a head of the screw type clamping member at the side of the surface portion and the retention of the head in sliding engagement along the slotted portion of the opening. Preferably, the guide and abutment element is fixedly joined to the second bracket portion by means of co-moulding.

Preferably, the second bracket portion is made from a metal material and the guide and abutment element is constructed by co-moulding from plastics material on the second bracket portion.

Preferably, the guide and abutment element comprises a beam which extends parallel with the longitudinal development direction of the through-opening and which is configured to abut, with supporting contact, at least one surface portion of the head of the screw type clamping member.

Preferably, the guide and abutment element comprises a pair of opposing lateral walls which extend parallel with and spaced apart from each other in the longitudinal development direction of the opening and which are capable of abutting corresponding opposite lateral surfaces of the head of the screw type member in order to retain the head in the opening with sliding engagement, preventing the head from rotating about its own axis.

Preferably, the guide and abutment element comprises a box-shaped member which has a base which is surrounded by a peripheral wall and a plurality of extension pieces which rise externally from the wall for connecting the guide and abutment element to the second bracket portion.

Preferably, the peripheral wall comprises two wall portions which are parallel with and spaced apart from each other and between which the head of the screw type member is slidingly guided, with limited connection play, without any substantial possibility of rotation about its own axis, the base of the box-shaped member abutting the head of the screw type member, preventing the screw type member from leaving once inserted in the slot-like opening.

Preferably, the extension pieces have respective free ends which are configured to engage in an interlocking manner with corresponding holes which are formed in the second bracket portion.

Preferably, the second bracket portion is made from metal material and the box-shaped member is made from a plastics material or metal material.

### Brief description of the drawings

Additional features and advantages of the invention will be better appreciated from the following detailed description of a number of preferred embodiments thereof which are illustrated by way of non-limiting example with reference to the appended drawings, in which:
- Figure 1 is a perspective view, with portions partially moved apart, of a first embodiment of a support bracket which is constructed according to the invention,
- Figure 2 is a perspective, partially sectioned view drawn to an enlarged scale, of a detail of the bracket of Figure 1,
- Figure 3 is a plan view of a detail of the bracket of the preceding Figures,
- Figure 4 is a cross-section along the line IV-IV of Figure 3,
- Figure 5 is a cross-section along the line V-V of Figure 3,
- Figure 6 is a cross-section along the line VI-VI of Figure 3,
- Figure 7 is a perspective view of the detail of Figure 3,
- Figure 8 is a side view of the detail of the bracket shown in Figure 2,
- Figure 9 is a plan view of the detail of Figure 2,
- Figure 10 is a cross-section along the line X-X of Figure 9,
- Figure 11 is a cross-section along the line XI-XI of Figure 9,
- Figure 12 is a partially exploded, perspective view of a second embodiment of a support bracket according to the invention,
- Figure 13 is a side view of a detail of the bracket of Figure 12,
- Figure 14 is a plan view of the detail of Figure 13,
- Figure 15 is a cross-section along the line XV-XV of Figure 14,
- Figure 16 is a cross-section along the line XVI-XVI of Figure 14,
- Figure 17 is a bottom view of the detail of Figure 13,
- Figure 18 is a perspective view of an additional construction variant of a detail of the bracket according to the invention,
- Figure 19 is a plan view of the detail of Figure 18,
- Figure 20 is a cross-section along the line XX-XX of Figure 19,
- Figure 21 is a cross-section along the line XXI-XXI of Figure 19.

### Preferred embodiments of the invention

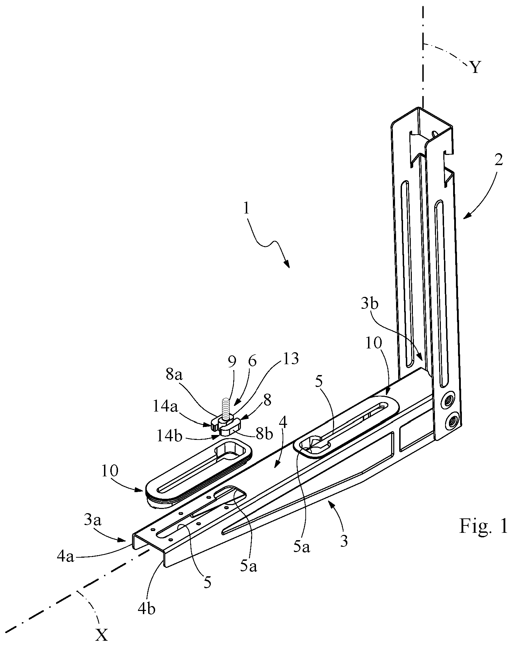

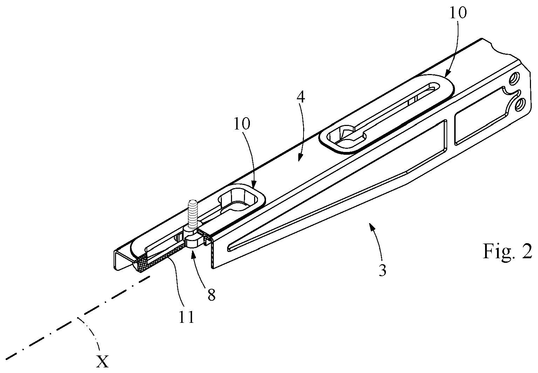

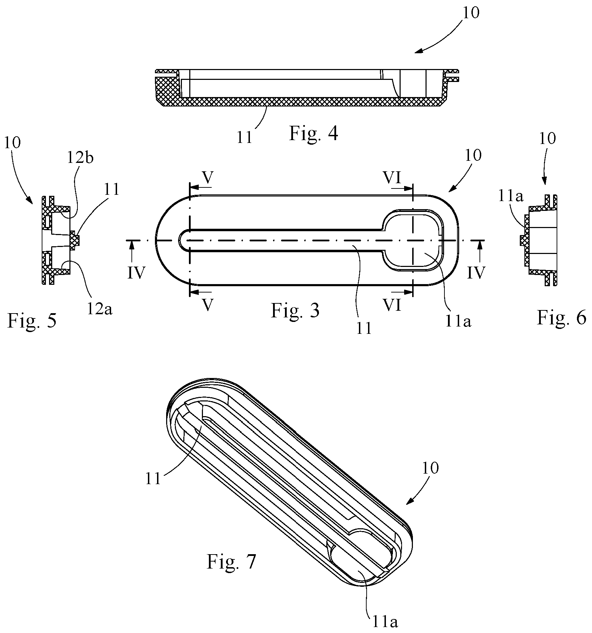

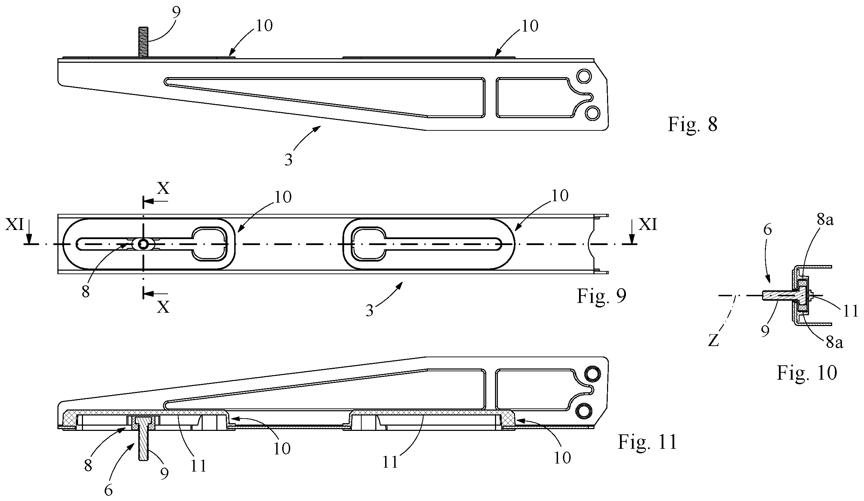

Initially with reference to Figures 1 to 11, there is generally designated 1 a first embodiment of a support bracket for equipment items, typically air-conditioning plant units (not illustrated), which is constructed according to the present invention.

Normally, there is provision for a pair of brackets 1 to be provided in a parallel and spaced-apart relationship with suitable relative spacing in order to define the support and fixing surfaces of the equipment, even if different configurations are alternatively possible.

The bracket 1 comprises a first and a second portion which are designated 2 and 3, respectively, and which are configured to be secured to each other at converging ends thereof in order to assume a square configuration which substantially extends in an L-like manner and which is suitable for performing the support function for the equipment.

The securing system between the bracket portions 2, 3 may provide for using locking screws which are engaged in through-holes which are formed, in a corresponding position, on both bracket portions, for example, with the configuration shown in Figure 1. Other blocking systems of the bracket portions or articulation portions with blocking in the extended L-shaped position are possible in any case. The inventive concept forming the basis of the invention is further also applicable to support brackets in which the first portion and second portion 2, 3 are integral with each other, in a one-piece formation of the support bracket.

The first bracket portion 2 therefore forms the vertical upright of the bracket which is provided for anchoring it, either directly to the wall or by means of coupling to a guiding cross-member (not illustrated) which is in turn fixed to the wall, while the second portion 3 forms the horizontal arm of the bracket which is provided for supporting and fixing the equipment on the bracket.

Each of the bracket portions 2 and 3 extends in a respective main longitudinal extent direction which is designated Y for the bracket portion 2 and X for the bracket portion 3, the bracket portion 3 extending between opposite longitudinal ends 3a, 3b.

There is defined on the second bracket portion 3 a surface portion 4 which extends between the ends 3a, 3b and which is intended to support and anchor the equipment item on the bracket.

The bracket 1 is advantageously made from metal material and is U-shaped in cross-section, wherein the surface portion 4 forms the upper connection wall of the opposite lateral sides which are designated 4a, 4b.

In order to anchor the equipment item to the bracket, the surface portion 4 is further provided with at least one respective through-opening 5 which is in the form of an elongate slot parallel with the direction X for slidingly engaging with at least one screw type clamping member which is generally designated 6 and which is provided to lock the equipment item on the corresponding bracket.

In a preferred form, which is shown in the Figures of this embodiment, the surface portion 4 is provided with two openings 5 which are aligned with each other with predetermined spacing in the X direction, each opening being able to be engaged with a corresponding screw type member 6. As a result of their structural identity, only one of the openings 5 will be described in detail below, it therefore being understood that this description may refer equally well to each of the openings provided.

In each opening 5, the elongate slot which delimits the opening leads, at one of the opposite ends of the slot, into a widened portion 5a of the opening, the extent of which is such as to allow a head 8 of the screw type clamping member 6 to be inserted and to extend through the opening. In an additional embodiment, in accordance with specific requirements, there may be provision for a respective widened portion 5a to be present in each of the longitudinal ends of the opening 5.

In greater detail, the screw type member 6 is provided with an externally threaded shank 9 which extends from the head 8 and which is provided to be engaged in a screwing manner, for example, by a locking nut (not illustrated) which is suitable for ensuring the locking of the equipment item against the support bracket.

According to a main feature of the invention, the bracket 1 comprises, in the region of the through-opening 5, a guide and abutment element which is designated 10 and which can be fixedly joined to the second bracket portion 3, being arranged mainly in a position under the surface portion 4 and being able to abut the screw type member 6 when the member is inserted in the opening 5 so as to prevent the screw type member from falling out of the opening itself. In one embodiment, the guide and abutment element 10 is fixedly joined to the second bracket portion 3 by means of co-moulding on the bracket portion 4 in the region of the slot-like opening 5.

Figure 1 shows one of the guide and abutment elements 10, for reasons of clarity, in a position spaced apart from the bracket, but in reality it is fixedly joined to the bracket following the co-moulding process with plastics material on the metal portion 4 of the bracket. By means of the co-moulding, the plastics material injected in the region both of the upper side and of the lower side of the surface portion 4, along the peripheral edge of the slot-like opening, forms the guide and abutment element in a single piece which is fixedly joined to the second bracket portion in a secure manner.

Alternatively, there may be provision for the guide and abutment element 10 to be constructed in two pieces which are different from each other and which are configured to be secured to each other, for example, with interlocking connection, in the region of the opening 5 so as to remain fixedly joined to the bracket.

The guide and abutment element 10 comprises a beam 11 which extends parallel with the longitudinal development direction X of the opening 5, at a preselected distance from the opening, in a position under the opening, so as to abut, with supporting contact, at least one surface portion of the head 8 of the screw type member when the member is inserted in the opening at the upper side, as will be shown clearly below.

The beam 11 extends between the opposite longitudinal ends of the opening 5 and in the region of the widened portion 5a, it is extended into a base 11a under the widened portion and with substantially the same surface extent.

The guide and abutment element 10 further comprises a pair of opposite side walls 12a, 12b which extend parallel with and spaced apart from each other in the direction X in the zone under the surface portion 4 of the bracket, at the sides of the beam 11.

The walls 12a, 12b are configured to abut corresponding opposite lateral surfaces 8a, 8b of the head 8 of the screw type member in such a manner that the head, once inserted in the slot-like opening 5, is retained with sliding engagement without any possibility of substantial rotation about the main individual axis designated Z.

The head 8 of the screw type member is advantageously formed as a co-moulded member on the threaded shank 9. In one embodiment, there may be provision for using a screw, the threaded shank 9 of which extends from a metal head, of conventional shape, for example, with a polygonal profile, and on which the head 8 made of plastics material is co-moulded.

In the embodiment shown in Figure 1, the head 9 of the screw type member has a central core 13, from which a pair of opposite wings 14a, 14b extend, each one carrying the corresponding lateral surface 8a, 8b. These lateral surfaces 8a, 8b have respective planar profiles and the distance between the surfaces is selected so that they are in abutment, in sliding contact with limited connection play, with the respective walls 12a, 12b of the guide and abutment element in order to ensure sliding engagement of the head inside the slot-like opening, preventing the rotation thereof about the individual axis Z.

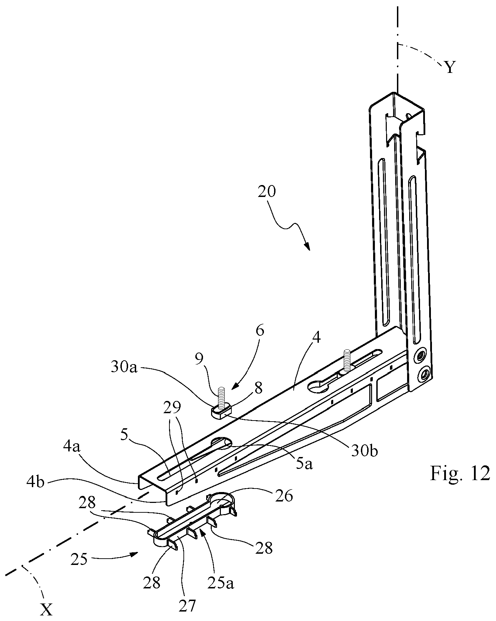

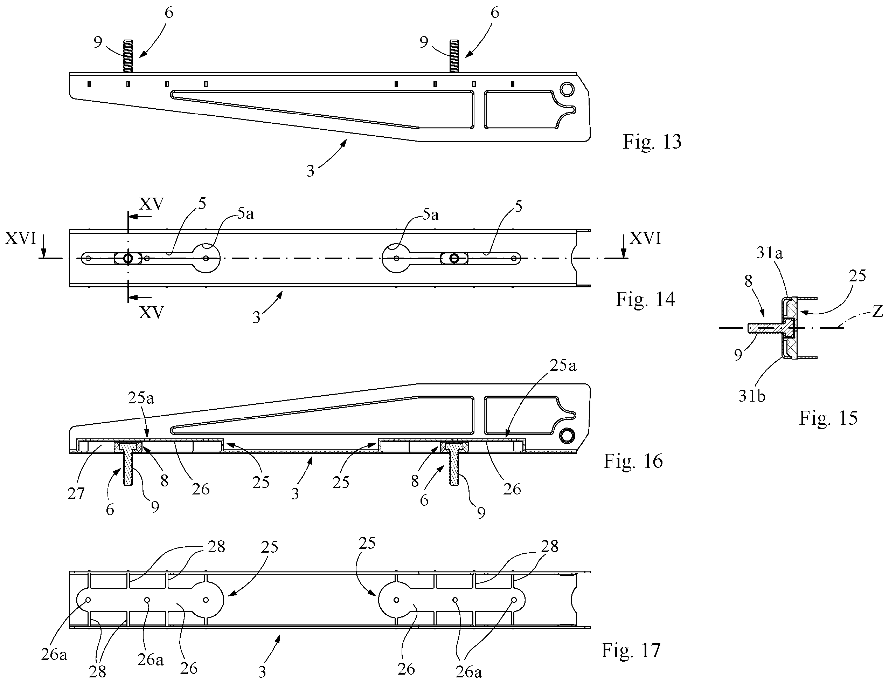

During operation, the screw type member is connected to the bracket by inserting the head 8 from above inside the widened portion 5a of the slot-like opening 5. Once the head is inserted, it is retained in sliding engagement along the slot (abutted by the surface portion 4 and the walls 12a, 12b of the guide and abutment element) without leaving the opening 5 at the bottom as a result of the vertical fall prevention support applied by the beam 11 of the guide and abutment element. The head of the screw is in fact supported by the supporting abutment against the beam which extends in the lower region. In this manner, as long as the screw type member is not locked in a screwed manner with the locking nut, in order to lock the equipment item on the support bracket, the screw type member remains retained inside the slot-like opening with the shank projecting at the upper side and the head received and supported by the guide and abutment element in a freely slidable manner inside the slot-like opening. With reference to Figures 12 to 17, there is designated 20 a second embodiment of the support rod according to the invention, in which similar details to those of the preceding embodiment are denoted with the same reference numerals.

This embodiment differs from the preceding one mainly in that the guide and abutment element which is designated 25 comprises a box-shaped member 25a which has a base 26 which is surrounded by a peripheral wall 27. The formation of the base reflects the form of the opening 5 and has an elongate zone which terminates in a widened end zone. There are designated 28 a plurality of extension pieces which rise externally from the wall 27, projecting transversely in order to act as coupling elements for the box-shaped member with respect to the second bracket portion.

To this end, the lateral wings 4a, 4b of the second bracket portion 3 are provided with through-holes 29 which are able to be engaged in an interlocking manner with the respective free ends of the extension pieces 28. With this coupling system, the box-shaped member 25a is fixedly joined to the second bracket portion 3 in the zone under the surface portion 4, with the base 26 arranged in the region of the opening 5 at a predetermined distance therefrom.

There are designated 26a through-holes which are formed in the base 26 for the purpose of discharging any accumulations of water or stagnating water inside the box-shaped member.

There are defined in the wall 27 two wall portions which are parallel with and spaced apart from each other and between which the head 8 of the screw type member is slidingly guided, with limited connection play, without any substantial possibility of rotation about its own axis Z. With such a configuration, the base 26 of the box-shaped member 25a abuts the head 8 of the screw type member in a supporting manner, preventing the screw type member from leaving the slot-like opening 5 once inserted in the opening from above through the widened portion 5a of the opening itself.

Preferably, the bracket of this second embodiment of the invention is also made from metal material and the box-shaped member 25a is preferably made from plastics material.

The head 8 of the screw type member 6 is preferably obtained by co-moulding plastics material on the metal threaded shank 9.

The head 8 of the screw type member is advantageously in the form of a co-moulded member on the threaded shank 9. In one embodiment, there may be provision for using a screw, the threaded shank 9 of which extends from a metal head, of conventional shape, for example, with a polygonal profile, and on which the head 8 made of plastics material is co-moulded.

The head 8 of the screw type member has, behind the attachment of the threaded shank 9, two opposing lowered surface portions 30a, 30b which are able to abut the respective and opposing edges of the slot-like opening 5 when the head 8 of the screw type member is received in the opening in a sliding manner.

There are defined in the head 8 of the screw type member a pair of opposing surfaces 31a, 31b with a planar profile, which are parallel with each other and the spacing of which is selected so that they are abutted, with limited connection play, by the respective walls 27 of the guide and abutment element in order to ensure sliding engagement of the head inside the box-shaped member, preventing the rotation thereof about the individual axis Z.

The operation is generally similar to the operation described in the preceding embodiment.

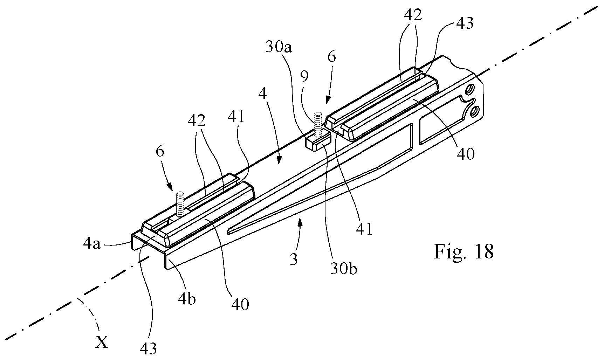

The screw type member 6 is connected to the bracket by inserting the head 8 from above inside the widened portion 5a of the slot-like opening 5. Once the head is inserted, it is retained in sliding engagement along the slot without leaving the opening 5 at the bottom as a result of the vertical fall prevention support applied by the box-shaped member of the guide and abutment element. The head of the screw is in fact supported by the supporting abutment against the box-shaped member which is located in the lower region. In this manner, as long as the screw type member is not locked in a screwed manner with the locking nut, in order to lock the equipment item on the support bracket, the screw type member remains retained inside the slot-like opening with the shank projecting at the upper side and the head received and supported by the guide and abutment element in a freely slidable manner inside the slot-like opening. Figures 18 to 21 illustrate another variant of the second bracket portion 3, in which similar details to those of the preceding embodiments are denoted with the same reference numerals.

In this variant, there is provision for each guide and abutment element to comprise a respective member 40 which is elongate in the direction X and which is fixedly joined to the surface bracket portion 4, in which the main portion of the member projects in the upper region beyond the profile of the surface portion.

There is provided in each member 40 a longitudinal slot 41 which extends in the longitudinal direction X and inside which the head 8 of the screw type member 6 is received and retained in sliding engagement.

In this embodiment, the screw type member has a formation which substantially corresponds to the formation described in the preceding embodiment of Figure 12, to which reference may be made for any further details.

The slot 41 is provided with opposing longitudinal edges 42 which delimit the opening of the slot and which project towards the internal cavity of the slot itself and against which the corresponding surfaces which form the opposing lowered surface portions 30a, 30b of the head 8 are in abutment so that the head, once slidingly inserted in the slot, is guided in the longitudinal direction X without any possibility of leaving the slot transversely relative to this direction.

Furthermore, as a result of the connection between the lateral walls of the slot and the respective and opposing surfaces 31a,b of the head 8, the screw type member is slidingly guided in the slot 41 without any substantial possibility of rotating about the individual axis Z.

At one of the opposing longitudinal ends thereof, the slot 42 is closed by a wall 43 which stops the sliding travel of the screw type member along the slot.

Advantageously, the member 40 of the guide and abutment element is constructed by means of co-moulding a plastics material on the surface portion 4 of the second bracket portion, the bracket portion preferably being made from metal material.

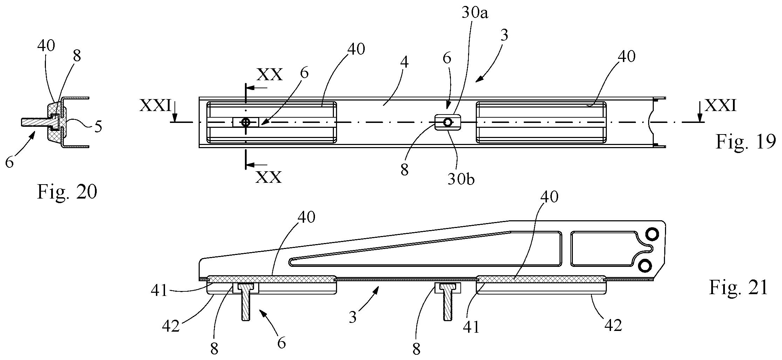

If the second bracket portion 3 is provided with the through-openings 5, the co-moulding of the member 40 in the region of this opening allows the member 40 to be securely anchored to the surface portion 4, both at the internal side and at the external side thereof, in the region of the opposing peripheral edges of the through-opening 5, as clearly shown in the sectional views of Figures 20 and 21.

In the embodiment described, there is preferably provision for the bracket portion 3 to be provided with a pair of members 40 which are arranged in alignment with each other and with spacing in the longitudinal direction X, each of which is able to retain a respective screw type member in the corresponding slot with sliding engagement.

The invention thereby achieves the objectives set out, affording the advantages set out with respect to the known solutions.

A main advantage is that, according to the invention, the screw type clamping members can be retained in position in the slot-like through-openings of the brackets until the time when the respective locking nuts are screwed without requiring any intervention by the fitter, preventing the screws from falling out of the slot-like openings, thereby making the locking operations easier for the fitter.

Another advantage is that, in the brackets according to the invention, the screw type clamping members are slidingly retained in the slot-like openings, before the locking, without the screw being able to rotate freely about the individual axis, making the locking operations of the locking nuts against the brackets easier for the fitter.

Yet another advantage is that, in the support bracket according to the invention, the screw type members can already be positioned on the bracket without any risk of leaving or falling out, already in a preliminary step with respect to being fixed to the wall, facilitating and making more convenient the subsequent operations of anchoring the equipment item, with a substantial improvement of the steps of installation, in particular for wall-mounted installation of the equipment items at significant heights.

## Claims

1. A support bracket for equipment, in particular units for air-conditioning plants, comprising a first bracket portion and a second bracket portion (2, 3) which are arranged for anchoring the bracket to a wall and for supporting and fixing the equipment to the bracket, respectively, the first and second bracket portions (2, 3) being able to be secured to each other in an operating condition, in which they assume an L-shaped configuration suitable for supporting the equipment, there being defined on the second bracket portion (3) a surface portion (4) which is intended for supporting the equipment, the surface portion (4) being provided with at least one through-opening (5) which is in the form of an elongate slot, for engaging in a sliding manner with at least one respective screw type clamping member (6) which is intended to anchor the equipment on the corresponding bracket, **characterised in that** it comprises, in the region of the at least one through-opening (5), an abutment element (10; 25) which can be fixedly joined to the second bracket portion (3) in a position below the surface portion (4) and which is able to abut the screw type member (6) when the screw type member is inserted in the opening (5) so as to prevent the screw type member (6) from falling out of the opening (5).

2. A support bracket according to claim 1, wherein the slot-like opening (5) has an elongate formation in a main longitudinal direction and the abutment element (10; 25) extends longitudinally in the direction at a predetermined distance from the slot-like opening (5).

3. A support bracket according to claim 1 or 2, wherein the through-opening (5) is widened in the region of at least one of the opposite longitudinal ends thereof so as to allow the insertion of a head (8) of the screw type clamping member (6) at the side of the surface portion (4) and the retention of the head (8) in sliding engagement along the slotted portion of the opening (5).

4. A support bracket according to any one of the preceding claims, wherein the abutment element (10) is fixedly joined to the second bracket portion (3) by means of co-moulding.

5. A support bracket according to claim 4, wherein the second bracket portion (3) is made from a metal material and the abutment element (10) is constructed by co-moulding from plastics material on the second bracket portion (3).

6. A support bracket according to any one of the preceding claims, wherein the abutment element (10) comprises a beam (11) which extends parallel with the longitudinal development direction of the through-opening (5) and which is configured to abut, with supporting contact, at least one surface portion of the head (8) of the screw type clamping member (6).

7. A support bracket according to any one of the preceding claims, wherein the abutment element (10) comprises a pair of opposing lateral walls (12a, 12b) which extend parallel with and spaced apart from each other in the longitudinal development direction of the opening, between said lateral walls (12a, 12b) being retained corresponding opposite lateral surfaces (8a, 8b) of the head (8) of the screw type member (6) with sliding engagement, preventing the head from rotating about its own axis.

8. A support bracket according to any one of claims 1 to 3, wherein the abutment element (25) comprises a box-shaped member (25a) which has a base (26) which is surrounded by a peripheral wall (27) and a plurality of extension pieces (28) which rise externally from the wall for connecting the abutment element (25) to the second bracket portion (3).

9. A support bracket according to claim 8, wherein the peripheral wall (27) comprises two wall portions which are parallel with and spaced apart from each other and between which the head (8) of the screw type member (6) is slidingly guided, with limited connection play, without any substantial possibility of rotation about its own axis, the base (26) of the box-shaped member (25a) abutting the head (8) of the screw type member (6), preventing the screw type member from leaving once inserted in the slot-like opening (5).

10. A bracket according to claim 8 or 9, wherein the extension pieces (28) have respective free ends which are configured to engage in an interlocking manner with corresponding holes (29) which are formed in the second bracket portion (3).

11. A support bracket according to any one of claims 8 to 10, wherein the second bracket portion (3) is made from metal material and the box-shaped member (25a) is made from a plastics material or metal material.

## Patentansprüche

1. Stützhalterung für Vorrichtung, insbesondere Einheiten für Klimaanlagen, umfassend einen ersten Halterungsabschnitt und einen zweiten Halterungsabschnitt (2, 3), die jeweils zum Verankern der Halterung an einer Wand und zum Stützen und Befestigen der Vorrichtung an der Halterung angeordnet sind, wobei der erste und zweiten Halterungsabschnitt (2, 3) in einem Betriebszustand, in dem sie eine zum Stützen der Vorrichtung geeignete L-förmige Konfiguration einnehmen, miteinander befestigbar sind, wobei an dem zweiten Halterungsabschnitt (3) ein zum Stützen der Vorrichtung bestimmter Oberflächenabschnitt (4) definiert ist, wobei der Oberflächenabschnitt (4) mit mindestens einer Durchgangsöffnung (5), die in Form eines Langschlitzes ist, zum schiebbaren Eingreifen mit mindestens einem jeweiligen schraubenartigen Klemmelement (6) vorgesehen ist, das zum Verankern der Vorrichtung an der entsprechenden Halterung bestimmt ist, **dadurch gekennzeichnet, dass** sie im Bereich der mindestens einen Durchgangsöffnung (5) ein Anlageelement (10; 25) umfasst, das in einer Position unterhalb des Oberflächenabschnitts (4) fest an den zweiten Halterungsabschnitt (3) befestigbar ist und das an dem schraubenartigen Element (6) anliegbar ist, wenn das schraubenartige Element in die Öffnung (5) eingesetzt ist, sodass ein Herausfallen des schraubenartigen Schraubelements (6) aus der Öffnung (5) verhindert ist.

2. Stützhalterung nach Anspruch 1, wobei die schlitzartige Öffnung (5) in einer Hauptlängsrichtung eine längliche Form hat und sich das Anlageelement (10; 25) longitudinal in der Richtung mit einem vorbestimmten Abstand von der schlitzartigen Öffnung (5) erstreckt.

3. Stützhalterung nach Anspruch 1 oder 2, wobei die Durchgangsöffnung (5) im Bereich mindestens eines der gegenüberliegenden Längsenden davon verbreitert ist, um das Einsetzen eines Kopfes (8) des schraubenartigen Klemmelements (6) an der Seite des Oberflächenabschnitts (4) und das Halten des Kopfes (8) in schiebbarem Eingreifen entlang des geschlitzten Abschnitts der Öffnung (5) zu ermöglichen.

4. Stützhalterung nach einem der vorstehenden Ansprüche, wobei das Anlageelement (10) durch Co-Molding fest mit dem zweiten Halterungsabschnitt (3) verbunden ist.

5. Stützhalterung nach Anspruch 4, wobei der zweite Halterungsabschnitt (3) aus einem Metallmaterial hergestellt ist und das Anlageelement (10) durch Co-Molding aus Kunststoffmaterial an dem zweiten Halterungsabschnitt (3) gebildet ist.

6. Stützhalterung nach einem der vorstehenden Ansprüche, wobei das Anlageelement (10) einen Träger (11) umfasst, der sich parallel zur Längserstreckungsrichtung der Durchgangsöffnung (5) erstreckt und der eingerichtet ist, an mindestens einem Oberflächenabschnitt des Kopfes (8) des schraubenartigen Klemmelements (6) in Stützkontakt anzuliegen.

7. Stützhalterung nach einem der vorstehenden Ansprüche, wobei das Anlageelement (10) ein Paar gegenüberliegender lateraler Wände (12a, 12b) umfasst, die sich parallel zueinander und voneinander beabstandet in der Längserstreckungsrichtung der Öffnung erstrecken, wobei zwischen den lateralen Wänden (12a, 12b) in schiebbarem Eingreifen entsprechende gegenüberliegende laterale Oberflächen (8a, 8b) des Kopfes (8) des schraubenartigen Elements (6) gehalten sind, sodass eine Drehung des Kopfes um seine eigene Achse verhindert ist.

8. Stützhalterung nach einem der Ansprüche 1 bis 3, wobei das Anlageelement (25) ein kastenförmiges Element (25a) umfasst, das eine Basis (26) umfasst, die durch eine Umfangswand (27) und eine Mehrzahl von Erstreckungsstücken (28) umgeben ist, die von der Wand nach außen vorstehen, um das Anlageelement (25) mit dem zweiten Halterungsabschnitt (3) zu verbinden.

9. Stützhalterung nach Anspruch 8, wobei die Umfangswand (27) zwei Wandabschnitte umfasst, die parallel zueinander und voneinander beabstandet sind und zwischen denen der Kopf (8) des schraubenartigen Elements (6), mit begrenztem Verbindungsspiel, ohne wesentliche Möglichkeit einer Drehung um seine eigene Achse, schiebbar geführt ist, wobei die Basis (26) des kastenförmigen Elements (25a) am Kopf (8) des schraubenartigen Elements (6) anliegt, sodass ein Herausfallen des schraubenartigen Elements nach dem Einsetzen in die schlitzartige Öffnung (5) verhindert wird.

10. Stützhalterung nach Anspruch 8 oder 9, wobei die Erstreckungsstücke (28) jeweilige freie Enden umfassen, die zum Eingreifen in entsprechende Löcher (29) auf eine ineinandergreifende Weise eingerichtet sind, die in dem zweiten Halterungsabschnitt (3), geformt sind.

11. Stützhalterung nach einem der Ansprüche 8 bis 10, wobei der zweite Halterungsabschnitt (3) aus Metall-Material hergestellt ist und das kastenförmige Element (25a) aus einem Kunststoff-Material oder Metall-Material hergestellt ist.

## Revendications

1. Support de soutien pour des équipements, en particulier des unités pour des installations de climatisation, comprenant une première portion de support et une deuxième portion de support (2, 3) qui sont disposées pour ancrer le support à un mur et pour soutenir et fixer l'équipement au support, respectivement, la première et la deuxième portion de support (2, 3) pouvant être fixées l'une à l'autre dans un état de fonctionnement, dans lequel elles prennent une configuration en forme de L convenant pour soutenir l'équipement, la deuxième portion du support (3) comporte une surface (4) destinée à supporter l'équipement, la surface (4) étant pourvue d'au moins une ouverture traversante (5) ayant la forme d'une fente allongée, destinée à s'engager de manière coulissante avec au moins un élément de serrage à vis (6) destiné à ancrer l'équipement sur le support correspondant, **caractérisé en ce qu'**il comprend, dans la zone de l'au moins une ouverture traversante (5), un élément de butée (10 ; 25) qui peut être fixé à la deuxième portion du support (3) dans une position en dessous de la portion de surface (4) et qui est capable de s'appuyer sur l'élément de type vis (6) lorsque l'élément de type vis est inséré dans l'ouverture (5) afin d'empêcher l'élément de type vis (6) de tomber de l'ouverture (5).

2. Support de soutien selon la revendication 1, dans lequel l'ouverture en forme de fente (5) a une forme allongée dans une direction longitudinale principale et l'élément de butée (10 ; 25) s'étend longitudinalement dans la direction à une distance prédéterminée de l'ouverture en forme de fente (5).

3. Support de soutien selon la revendication 1 ou 2, dans lequel l'ouverture traversante (5) est élargie dans la région d'au moins une de ses extrémités longitudinales opposées de manière à permettre l'insertion d'une tête (8) de l'élément de serrage à vis (6) sur le côté de la portion de surface (4) et le maintien de la tête (8) en engagement coulissant le long de la portion fendue de l'ouverture (5).

4. Support de soutien selon l'une quelconque des revendications précédentes, dans lequel l'élément de butée (10) est relié de manière fixe à la deuxième portion du support (3) par co-moulage.

5. Support de soutien selon la revendication 4, dans lequel la deuxième portion du support (3) est faite d'un matériau métallique et l'élément de butée (10) est construit par co-moulage à partir d'un matériau plastique sur la deuxième portion du support (3).

6. Support de soutien selon l'une quelconque des revendications précédentes, dans lequel l'élément de butée (10) comprend une poutre (11) qui s'étend parallèlement à la direction de développement longitudinal de l'ouverture traversante (5) et qui est configurée pour venir en butée, avec un contact d'appui, contre au moins une portion de la surface de la tête (8) de l'élément de serrage de type vis (6).

7. Support de soutien selon l'une quelconque des revendications précédentes, dans lequel l'élément de butée (10) comprend une paire de parois latérales opposées (12a, 12b) qui s'étendent parallèlement et à distance l'une de l'autre dans la direction de développement longitudinal de l'ouverture, entre lesdites parois latérales (12a, 12b) étant retenues les surfaces latérales opposées correspondantes (8a, 8b) de la tête (8) de l'élément de type vis (6) avec un engagement coulissant, empêchant la tête de tourner autour de son propre axe.

8. Support de soutien selon l'une des revendications 1 à 3, dans lequel l'élément de butée (25) comprend un élément en forme de boîte (25a) qui a une base (26) entourée d'une paroi périphérique (27) et une pluralité de pièces d'extension (28) qui s'élèvent à l'extérieur de la paroi pour relier l'élément de butée (25) à la deuxième portion du support (3).

9. Support de soutien selon la revendication 8, dans lequel la paroi périphérique (27) comprend deux portions de paroi parallèles et espacées l'une de l'autre, entre lesquelles la tête (8) de l'élément de type vis (6) est guidée de manière coulissante, avec un jeu de connexion limité, sans possibilité substantielle de rotation autour de son propre axe, la base (26) de l'élément en forme de boîte (25a) venant en butée contre la tête (8) de l'élément de type vis (6), empêchant l'élément de type vis de sortir une fois inséré dans l'ouverture en forme de fente (5).

10. Support de soutien selon la revendication 8 ou 9, dans lequel les pièces d'extension (28) ont des extrémités libres respectives qui sont configurées pour s'emboîter dans les trous correspondants (29) qui sont formés dans la deuxième portion du support (3).

11. Support de soutien selon l'une des revendications 8 à 10, dans lequel la deuxième portion du support (3) est en métal et l'élément en forme de boîte (25a) est en plastique ou en métal.
